Europäisches Patentamt

European Patent Office

Office européen des brevets

(19)

(11) **EP 0 836 342 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(51) Int Cl.7: **H04Q 7/36**

(21) Anmeldenummer: **96116372.2**

(22) Anmeldetag: **11.10.1996**

(54) **Verfahren zur Nachbarschaftsbetrachtung und/oder Nachbarschaftsplanung von Feststationen eines zellularen Funknetzes**

Method for neighbourhood relation determination and/or neighbourhood planning of base stations in a cellular radio network

Méthode de détermination des relations de voisinage et/ou de planification de voisinage de stations de base dans un réseau radio cellulaire

(84) Benannte Vertragsstaaten:
**AT CH FR GB LI NL SE**

(43) Veröffentlichungstag der Anmeldung:
**15.04.1998 Patentblatt 1998/16**

(73) Patentinhaber: **T-Mobile Deutschland GmbH**
**53227 Bonn (DE)**

(72) Erfinder: **Pfeiffer, Bernd, Dr.**
**51465 Bergisch Gladbach (DE)**

(74) Vertreter: **Riebling, Peter, Dr.-Ing.**
**Patentanwalt**
**Postfach 31 60**
**88113 Lindau (DE)**

(56) Entgegenhaltungen:
**WO-A-90/10342**

• **FOURTH IEE CONFERENCE ON TELECOMMUNICATIONS, MANCHESTER, GB, 18 - 21 APRIL 1993, Seiten 1-5, XP000473691 GILL T M: "AN AUTOMATED SYSTEM FOR FREQUENCY PLANNING OF CELLULAR RADIO NETWORKS"**
• **VTC 1994,"CREATING TOMORROW'S MOBILE SYSTEMS". 1994 IEEE 44TH VEHICULAR TECHNOLOGY CONFERENCE, STOCKHOLM, SE, 8 - 10 JUNE 1994, Bd. 2, Seiten 848-852, XP000496796 ANTON M D ET AL: "AN ADAPTIVE METHOD TO LEARN THE COMPATIBILITY MATRIX FOR MICROCELLULAR SYSTEMS"**

**Beschreibung**

Die Erfindung betrifft ein Verfahren zur globalen Nachbarschaftsplanung von, Feststationen eines zellularen Funknetzes, nach dem Oberbegriff des Patentanspruchs 1.

Solche Verfahren lassen sich zur Planung von Nachbarschaften der Feststationen eines zellularen Funknetzes, insbesondere eines digitalen Funknetzes, vorzugsweise nach dem GSM-Standard, einsetzen, z.B. wenn neue Feststationen zusätzlich in das Funknetz eingefügt werden oder die Sendeeigenschaften bereits bestehender Feststationen geändert werden. Im Rahmen einer Nachbarschaftsbetrachtung zur Planung von Nachbarschaften erfolgt insbesondere eine Prüfung und gegebenenfalls Bestimmung von Nachbarschaften der betrachteten Feststationen. Aufbauend auf die ermittelten Nachbarschaften können weitere Planungsschritte für die Feststationen in wesentlich optimierter Weise erfolgen.

Grundlage für eine brauchbare Nachbarschaftsplanung ist eine den realen Verhältnissen möglichst angepaßte Bestimmung der Nachbarschaften von Feststationen. Hierzu sind bislang geometrischräumliche Verfahren bekannt, mit denen ein Zellrand zwischen den Zellen der verschiedenen Feststationen konstruiert wird. Besitzen zwei Zellen einen gemeinsamen Zellrand, so sind diese bzw. ihre die Zellen versorgenden Feststationen benachbart. Die so konstruierten Nachbarschaften sind per Definition immer symmetrisch, d.h. ist eine Feststation A einer Feststation B benachbart, so ist auch die Feststation B der Feststation A benachbart.

Die Konstruktion des Zellrandes kann einmal rein geometrisch erfolgen, indem aus den Mittelsenkrechten der Verbindungslinien zwischen den einzelnen Feststationen die Zellbereiche für jede einzelne Feststation gebildet werden.

Ein weiteres Verfahren basiert auf der Anwendung eines mehr oder weniger vereinfachten Feldstärkeprädiktionsmodells für jede Feststation. Als Rand der von einer Feststation versorgten Zelle wird der Rand des Versorgungsgebietes festgelegt, in dem die betrachtete Feststation als best server wirkt.

Die Konstruktion eines Randes um eine Funkzelle stellt jedoch nicht die realen Gegebenheiten in einem von mehreren Feststationen versorgten zellularen Funknetz dar. Es tritt häufig der Fall auf, daß Gebiete durch mehrere Feststationen versorgt werden. Ein sich im Funknetz bewegendes mobiles Endgerät wird dabei in der Regel erst dann an die benachbarte Feststation weitergereicht (Handover), wenn die Verbindungsqualität zur benachbarten Feststation um ein gewisses Maß über der Verbindungsqualität zur ursprünglich das Endgerät versorgenden Feststation liegt. Es treten somit gewisse Hystereseeffekte auf, da der Zellrand einer Zelle A bei einer Bewegung des Endgerätes von der Zelle A in Zelle B tatsächlich weiter in die Zelle B reicht, als durch die Verfahren zur Zellrandkonstruktion ermittelt. Umgekehrt reicht der Zellrand der Zelle B bei einer Bewegung des Endgerätes von der Zelle B in die Zelle A weiter in die Zelle A, als durch die Verfahren zur Zellrandkonstruktion ermittelt. Ein weiteres Festhalten an geometrisch-räumlichen Zellrandkonstruktionen zur Nachbarschaftsplanung erscheint somit fraglich.

In einem Artikel von GILL, T. M.: "An Automated System for Frequency Planning of Cellular Radio Networks"; In: FOURTH IEE CONFERENCE ON TELECOMMUNICATIONS, Manchester, GB, 18-21 April 1993, Seiten 1-5, XP 000473691, ist ein Verfahren zur Frequenzplanung und globalen Nachbarschaftsplanung von Feststationen eines zellularen Funknetzes offenbart. Das Funknetz beinhaltet Feststationen sowie mobile Kommunikationsendgeräte, wobei ein zu planendes Gebiet in ein Raster von rechteckigen Rasterelementen unterteilt wird, wobei individuell auf jedem Rasterelement des vordefinierten Rasters eine Bestimmung der lokalen Nachbarschaften zwischen den dieses Rasterelement versorgenden Feststationen erfolgt, und diese zu einer globalen Nachbarschaftsplanung der Feststationen für das gesamte zu planende Gebiet zusammengefasst werden. Zur lokalen Bestimmung der Nachbarschaft werden die durch eine Feldstärkeprädiktion ermittelten Feldstärken der Feststationen verwendet und dabei auf jedem Rasterelement mindestens zwei der das Rasterelement versorgenden Feststationen betrachtet. Eine Nachbarschaftsplanungaus Sicht der mobilen Endgeräte erfolgt hier nicht.

Aufgabe der vorliegenden Erfindung ist es, ein Verfahren zur Nachbarschaftsplanung bereitzustellen, das die tatsächlichen Gegebenheiten bei Nachbarschaften von Feststationen zellularer Funknetze, insbesondere aus Sicht der Endgeräte, beschreibt.

Diese Aufgabe wird erfindungsgemäß durch die Merkmale des Patentanspruchs 1 gelöst.

Vorteilhafte Ausgestaltungen der Erfindung sind in den abhängigen Patentansprüchen angegeben.

Zur Planung der globalen Nachbarschaften von Feststationen wird ein Raster für das zu betrachtende Gebiet definiert, dessen Auflösung vom jeweiligen Anwender des Verfahrens festzulegen ist. Nicht selten ergibt sich für die einzelnen Elemente des Rasters die Situation, daß sie im Versorgungsbereich von mehr als nur einer Feststation liegen. Im Gegensatz zu den geometrisch-räumlichen Betrachtungen der Zellrand-Konstruktionen wird eine funktionelle Nachbarschaftsbetrachtung durchgeführt. In diesem Rahmen wird eine individuell auf jedem Rasterelement des vordefinierten Rasters erfolgende lokale Nachbarschaftsbetrachtung der Feststationen zugrundegelegt. Dabei ist insbesondere vorgesehen, daß auf jedem der Rasterelemente isoliert eine Prüfung und gegebenenfalls Bestimmung der lokalen Nachbarschaften zwischen den dieses Rasterelement versorgenden Feststationen erfolgt, umliegende Rasterelemente hierzu jedoch nicht mit einbezogen werden. Der lokalen Nachbarschaftsbetrachtung wird die Verwendung ausgewählter Funkparameter der Feststationen, insbesondere der durch Feldstärkeprädiktion gewonnenen Feldstärke, zugrundegelegt. Ferner werden auf jedem einzelnen Rasterelement mindestens zwei der dieses Element versorgenden Feststationen betrachtet.

Erfindungsgemäß ist auf jedem Rasterelement für die dieses Element versorgenden Feststationen eine Prüfung geeignet gewählter Nachbarschaftskriterien vorgesehen, wobei als Nachbarschaftskriterien Handover-Kriterien des zellularen Funknetzes verwendet werden. So lassen sich z.B. für die Entscheidung, ob zwischen jeweils zwei der versorgenden Feststationen ein Handover möglich ist, bestimmte, von dem zellularen Netz für jede Feststation als einstellbar vorgebbare Parameter und eine Feldstärkeprädiktion heranziehen. Diese Berücksichtigung der Handover-Algorithmen hat zum Vorteil, daß die Nachbarschaften aufgrund realer, funktioneller Gebenheiten ermittelt werden, wie sie idealerweise von einem sich im Funknetz bewegenden Endgerät erfahren werden. Aus der Sicht eines Endgerätes sind Nachbarschaften nicht von Interesse, die auf rein geometrischen Vorgaben beruhen mögen, die aber keinen wirklichen Handover von der einen Feststation zur benachbarten zulassen. Hierbei werden nach positivem Prüfungsergebnis auf einem Rasterelement unsymmetrische lokale Nachbarschaften zwischen mindestens jeweils zwei Feststationen definiert. Dabei kann vorgesehen werden, daß eine Station A als einer Station B lokal benachbart definiert wird, wenn die Feldstärke der Station B auf dem Rasterelement die dortige Feldstärke der Station A um einen gewissen Betrag übersteigt. Hierbei wird den tatsächlichen Gegebenheiten des Handovers Rechnung getragen.

Als Maß für die Stärke von globalen Nachbarschaften von Feststationen wird in einer Ausbildung des Erfindungsgedankens die Gesamtzahl der Rasterelemente definiert, in denen die jeweiligen lokalen Nachbarschaften ermittelt wurden. Treten bestimmte lokale Nachbarschaften nur in sehr wenigen Rasterelementen auf, so können diese als global nachrangig benachbart eingestuft werden. Für eine praktikable globale Nachbarschaftsbetrachtung ist es angebracht, für jede Feststation nur eine begrenzte Zahl von ihr global benachbarten Feststationen zu berücksichtigen, wobei vorzugsweise nach einer erfolgten Bestimmung der Stärke der globalen Nachbarschaften nur eine gewisse Zahl als vorrangig eingestufter globalen Nachbarschaften Berücksichtigung finden. Es sind jedoch bei der Auswahl der zu berücksichtigenden, global benachbarten Feststationen für eine erste Feststation auch umgekehrt die globalen Nachbarschaftsbeziehungen der global benachbarten Feststation zur ersten Feststation mit heranzuziehen, da in der Regel symmetrische globale Nachbarschaften ermittelt werden und eine schwache globale Nachbarschaft von Feststation A zu Feststation B, wie sie sich nach einer Prüfung und Gesamtzahlermittlung ergeben kann, nicht automatisch eine schwache globale Nachbarschaft von B zu A impliziert.

In einer vorteilhaften Weiterbildung der Erfindung werden bei der Nachbarschaftsplanung vorgegebene Nachbarschaftsdaten der Feststationen mit berücksichtigt. Damit kann erreicht werden, daß durch lange praktische Erfahrung optimierte Nachbarschaftsbeziehungen bereits bestehender Feststationen, die von einer Neu- bzw Umplanung im Rahmen einer Nachbarschaftsplanung nicht betroffen sind, nicht erneut bestimmt werden, da solche "vorOrt-Ergebnisse" nicht selten exakter sind als berechnete Ergebnisse. Neu bestimmt werden damit nur Bereiche, die tatsächlich von einer Neu- bzw Umplanung betroffen sind.

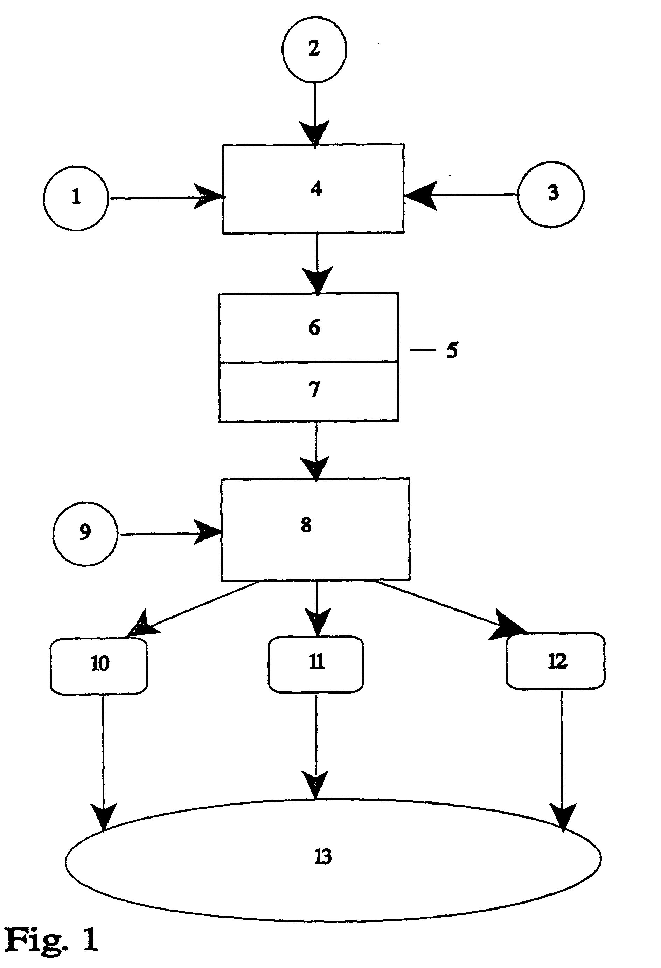

Ein spezielles Ausführungsbeispiel wird anhand der Fig. 1 sowie der folgenden Beschreibung erläutert. Als Funknetz wird hierbei ein digitales Mobilfunknetz nach dem GSM-Standard betrachtet.

Fig. 1 zeigt ein Blockdiagramm eines Verfahrens zur Betrachtung und Planung von Nachbarschaften in einem zellularen Funknetz.

In dem vorgestellten Ausführungsbeispiel wird das Verfahren im Rahmen der Planung von handover-Nachbarschaften für ein GSM-Funknetz beschrieben. Dabei wird angenommen, daß in dem GSM-Funknetz der handover-Algorithmus implementiert ist, wie er in den GSM-Recommendations 05.08, Annex A, empfohlen wird.

Das Verfahren wird zweckmäßigerweise in einem Software-Programm implementiert und auf einem Computer angewendet.

Die wesentlichen Eigenschaften des Verfahrens lassen sich kurz wie folgt skizzieren:

- Die Basis für die Berechnung von Nachbarschaften ist die Feldstärkeprädiktion für jede bei der Planung betrachtete BTS.

- Der Algorithmus zur Planung der Nachbarschaftsbeziehungen basiert auf den Spezifikationen GSM Rec. 05.08 für *radio link control*.

- Treten dabei mehr als eine vorgebbare maximale Anzahl von Nachbarn auf, so werden von dem Verfahren die wichtigsten ausgewählt.

- vorgegebene Nachbarn, z.B. bei einer sukzessiven Netzaufbauplanung, werden von dem Verfahren berücksichtigt.

Das Ergebnis der Nachbarschaftsplanung kann Ausgangspunkt einer weiteren manuellen Optimierung der Nachbarschaften oder einer Visualisierung sein. Insbesondere kann das Ergebnis für weitere darauf aufsetzende Funknetz-Planungschritte verwendet werden.

### 1. Eingangsdaten des Verfahrens

Das Verfahren benötigt als Eingangsgrößen mehrere sogenannte Netzdefinitionen 1. Eine Netzdefinition 1 ist eine Zusammenfassung von BTS einschließlich aller ihrer funktechnischen Parameter wie z.B. Koordinaten, Höhe des Antennenträgers, Sendeleistungen, Antennendiagramme, etc.. Die Netzdefinitionen 1 entstehen i.a. aus der Betrachtung des Funknetzes zu einem bestimmten Stichtag, d.h. es werden alle BTS betrachtet, die zu einem bestimmten Stichtag in dem Funknetz in Betrieb sein sollen.

Das Verfahren benötigt zwei Netzdefinitionen 1, das Gesamtnetz und das Teilnetz. Das Gesamtnetz besteht i.a. aus allen BTS, die zu dem o.g. Stichtag in Betrieb sein sollen. Bei einer Netzaufbauplanung, bei der in mehreren aufeinanderfolgenden Planungen das Funknetz immer um eine bestimmte Anzahl von BTS erweitert wird, ist die Angabe eines weiteren Netzes, des "Teilnetzes", nötig. Dieses Teilnetz besteht gerade aus den BTS, die in dem Zeitraum seit der letzten, davorliegenden Planung neu in das Netz aufgenommen wurden. Das Teilnetz muß also immer eine Teilmenge des Gesamtnetzes sein. Die BTS, die im Gesamtnetz, aber nicht im Teilnetz sind, sind alte BTS, d.h. diese sind bereits bei der vorhergehenden Planung geplant worden.

Ausgehend von den Koordinaten aller BTS des Gesamtnetzes werden die Eckpunkte des Planungsgebietes berechnet. Für dieses Planungsgebiet wird ein Raster definiert, d.h. das Planungsgebiet wird in kleine, rechteckige Rasterelemente unterteilt. In dieses vordefinierte Raster werden die downlink-Feldstärken 3 aus einer Feldstärkeprädiktion für jede BTS des Gesamtnetzes eingelesen. Die linearen Abmessungen eines Rasterelementes liegen typischerweise in der Größenordnung 10 m bis 100m, dies hängt zum einen von der Genauigkeit der Feldstärkeprädiktion ab und zum anderen von der Speichergröße des verwendeten Rechners.

Mit den eingelesenen Feldstärken 3 wird ein Feldstärkequader aufgebaut, d.h. für das gesamte Raster wird an jedem Rasterelement die Feldstärke von *best server, second best server*, ..., bis N *best server* gespeichert. N ist einer von mehreren Steuerungsparametem 2, der die Tiefe des Feldstärkequaders angibt. Dieser Feldstärkequader ist Ausgangspunkt des Verfahrens.

### 2. Algorithmus für die globale Basis-Nachbarschaft

Ausgehend von dem Feldstärkequader wird für alle BTS des Gesamtnetzes die Basis-Nachbarschaft 4 berechnet.

Der im folgenden beschriebene Algorithmus zur Ermittlung der globalen Basis-Nachbarschaft 4 basiert auf dem *C1-Kriterium* und dem *power budget* nach GSM Rec. 05.08.

An jedem Rasterelement wird zunächst eine lokale Nachbarschaftsbetrachtung durchgeführt. Dazu werden auf jedem Rasterelement die ersten N *best server* betrachtet. Der Parameter N entspricht dem GSM-Parameter *'number of preferred target cells'*. Für jeden *server* i wird geprüft, ob die zugehörige downlink-Feldstärke RXLEV_DL(i) das *C1-Kriterium* erfüllt (d.h . C1 > 0):

$$C1(i) = RXLEV\_DL(i) - RXLEV\_MIN(i) -$$

$$Max \{ 0, MS\_TXPWR\_MAX(i) - P(MS) \} > 0$$

Zwischen allen *servern*, die dies erfüllen, wird die (antisymmetrische N x N) Matrix des *power budget* PBGT (i->j) berechnet:

$$PBGT(i{-}{>}j) = Min \{ MS\_TXPWR\_MAX(i), P(MS) \} - RXLEV\_DL(i) -$$

$$\{ Min \{ MS\_TXPWR\_MAX(j), P(MS) \} - RXLEV\_DL(j) \}$$

Entsprechend dem in den Spezifikationen geforderten Anlegen der *'list of preferred target cells'* wird für jeden *server* i das Maximum über j von PBGT(i->j) gebildet:

$$PBGT\_MAX(i) = Max \{ PBGT(i{-}{>}j) \}$$

Der zugehörige *server* sei k. Nach den oben genannten Spezifikationen lautet die Bedingung für ein mögliches *handovervon* i nach k:

$$PBGT\_MAX(i) > HO\_MARGIN(i\text{-}>k)$$

Ist diese Bedingung erfüllt, wird die entsprechende Nachbarschaft an dem betrachteten Rasterelement unsymmetrisch gesetzt, sofern sie nicht schon vorhanden ist. Mit diesem Verfahren werden an einem Rasterelement maximal N-1 Nachbarschaften detektiert.

Durch Iteration des Verfahrens über alle Rasterelemente erhält man die globale Nachbarschaft. Dabei wird die Anzahl der Rasterelemente, an denen dieselbe Nachbarschaft lokal gefunden wurde, in einer 'Gewichtsmatrix' mitgezählt.

Diese Gewichte sind ein Maß für die Stärke einer globalen Nachbarschaft. Die Nachbarschaftsliste einer BTS wird zweckmäßigerweise geordnet nach der Stärke: der erste Nachbar ist der stärkste Nachbar u.s.w..

### 3. Komprimieren der Basis-Nachbarschaft

Dieser Algorithmus 5 ist eine vorteilhafte Erweiterung des vorgestellten Verfahrens zur Ermittlung der globalen Basis-Nachbarschaft 4. Er dient dazu, die Anzahl der Nachbarn ggf. zu reduzieren, ohne dabei "wichtige" Nachbarn zu verlieren.

Die nach obigem Verfahren ermittelte Basis-Nachbarschaft 4 aller BTS des Gesamtnetzes wird über ein Entfernungskriterium 6 geprüft: wenn zwei BTS miteinander benachbart sind, aber der Abstand der beiden BTS größer als 2 x MS_RANGE_MAX ist, so wird die Nachbarschaft gestrichen.

In einem weiteren Schritt 7 werden die Nachbarschaften von BTS mit mehr als MAX_NB Nachbarn auf MAX_NB Nachbarn komprimiert. Der Parameter MAX_NB wird sinnvollerweise kleiner gleich der in den GSM-Rec. spezifizierten Höchstgrenze an Nachbarn gesetzt, d.h. MAX_NB <= 32.

Die überzähligen Nachbarn werden symmetrisch gestrichen, d.h., falls vorhanden, wird die umgekehrt gerichtete Nachbarschaftsbeziehung ebenfalls entfernt.

Die Auswahl der zu streichenden Nachbarn geschieht mit einem 'Streichungsalgorithmus'. der am besten an einem Beispiel zu erklären ist:

Die BTS i habe mehr als MAX_NB Nachbarn. Dann wird die (nach der Stärke geordnete) Nachbarschaftsliste von hinten aufgerollt, der letzte Nachbar sei die BTS j.

Ist die Nachbarschaft unsymmetrisch (also nur i->j), so wird sie gestrichen.

Ist die Nachbarschaft symmetrisch, so wird sie nur dann gestrichen, wenn die umgekehrte Nachbarschaft j->i bei BTS j an späterer Stelle als MIN_NB steht.

Hat BTS i immer noch mehr als MAX_NB Nachbarn, so wird die vor letzte Nachbarschaft betrachtet u.s.w..

Führt die Iteration dieses Verfahrens nicht zum Ziel, so wird für die aktuell betrachtete BTS der Parameter MIN_NB um eins erniedrigt und das Verfahren wiederholt.

Mit diesem Verfahren wird sichergestellt, daß eine Nachbarschaft i->j, die zwar für BTS i eine niedrige Bedeutung hat, aber für die BTS j eine hohe Bedeutung hat, möglichst erhalten bleibt. Der Parameter MIN_NB gibt die Anzahl der "möglichst zu erhaltenden" Nachbarn an.

### 4. Verschneidung der Basis-Nachbarschaft mit den vorgegebenen Nachbarn

Dieser Algorithmus 8 ist eine weitere vorteilhafte Ergänzung des Verfahrens. So will man z.B. bei einer sukzessiven Aufbauplanung eines Funknetzes im allgemeinen erreichen, daß nur diejenigen BTS neu geplant werden, an denen auch wirklich Änderungen notwendig sind. Dabei wird eine Liste 9 mit bereits vorgegebenen Nachbarschaften berücksichtigt.

Deshalb wird zweckmäßigerweise im Falle einer solchen Aufbauplanung versucht, die letzte Nachbarschaft der davorliegenden Planung zu erhalten. In diesem Fall wäre diese zuvor geplante Nachbarschaft 4 die vorgegebene Nachbarschaft 9.

Die vorgegebene Nachbarschaft 9 kann aber auch anderer Herkunft sein. Sie kann z.B. im Vorfeld einer Planung bereits manuell gesetzt worden sein.

Beim Verschneiden werden vom Verfahren als Ergebnis zwei flags gesetzt. Diese flags geben Informationen über die BTS des Netzes und über die Nachbarschaften. Sie können für nachfolgende Planungsschritte vorteilhaft ausgewertet werden. Die flags und ihre Werte sind im einzelnen:

das "Betroffen-flag", Werte: BETR (betroffen, d.h. wird neu oder um geplant), N_BETR (nicht betroffen, d.h. alte BTS, die schon im vorhergehenden Planungszyklus vorhanden war). Dieses flag gibt an, ob eine BTS von der aktuellen Planung betroffen ist oder nicht. Es wird pro BTS gesetzt.
das "Status-flag", Werte: DB (vorgegebene, z.B. von einer Datenbank gelesene Nachbarschaftsbeziehung 9), DB_NAPLA (vorgegebene 9 und vom Algorithmus ermittelte Nachbarschaftsbeziehung 4), NAPLA (nur vom Verfahren ermittelte Nachbarschaftsbeziehung 4). Dieses flag gibt die Herkunft der Nachbarschaftsbeziehung an. Es wird pro Nachbar gesetzt.

An dem "Betroffen-flag" kann man erkennen, an welchen BTS durch die aktuelle Planung überhaupt Änderungen entstanden sind und welche BTS unverändert geblieben sind.

Anhand des "Status-flags" kann man z.B. erkennen, ob ein vorgegebener Nachbar auch vom Algorithmus geplant worden ist.

Im folgenden wird beschrieben, wie diese flags vom Verfahren gesetzt werden.

### 4.1 Verschneidung für die neuen BTS

In einem Schritt 10 erhalten alle neuen BTS des Teilnetzes für das Betroffen-flag den Wert BETR. Für die neuen BTS bleiben alle vom Verfahren ermittelten Nachbarn erhalten. Die vorgegebenen Nachbarn 9 werden mit den berechneten Nachbarn 4 verglichen.

Alle nur vom Verfahren berechneten Nachbarn 4 erhalten den Status NAPLA.

Ist ein vorgegebener Nachbar 9 auch berechnet worden, so wird das Status-flag auf DB_NAPLA gesetzt.

Alle vorgegebenen Nachbarn 9, die nicht vom Verfahren ermittelt wurden, werden an die Nachbarschaftsliste am Ende angehangen und erhalten den Status DB, solange wie die Gesamtzahl Nachbarn kleiner als MAX_NB ist. Sie erhalten das gleiche Gewicht wie der letzte vom Verfahren geplante Nachbar 4.

### 4.2 Verschneidung für die umzuplanenden BTS

In einem GSM-Funknetz müssen symmetrische Nachbarschaftsbeziehungen in beiden Richtungen in den Netzelementen (BTS, BSC) administriert werden. Deshalb müssen außer den neu ins Netz kommenden BTS des Teilnetzes je nach Lage dieser neuen BTS auch weitere alte BTS umgeplant werden.

In einem weiteren Verfahrensschritt 11 werden diese umzuplanenden BTS ermittelt. Umzuplanende BTS sind alte BTS, d.h. die im Gesamtnetz, aber nicht im Teilnetz der neuen BTS sind, und für die vom Verfahren mindestens ein im Teilnetz der neuen BTS liegender Nachbar ermittelt wurde. Alle umzuplanenden BTS erhalten für das Betroffen-flag den Wert BETR.

Für die umzuplanenden BTS werden zunächst die vorgegebenen Nachbarn 9 geprüft, ob diese noch "aktuell" sind, oder ob zwischen zwei alte BTS, die eine vorgegebene Nachbarschaftsbeziehung 9 haben, eine neue BTS ins Netz gekommen ist und deshalb die vorgegebene Nachbarschaftsbeziehung 9 nicht mehr "aktuell" ist. Dieses wird folgendermaßen festgestellt. Ist eine vorgegebene Nachbarschaftsbeziehung 9 auch im Verfahrensschritt 4 berechnet worden, so ist sie noch aktuell. Ist die vorgegebene *source-target*-Beziehung nicht im Verfahrensschritt 4 berechnet worden, so wird geprüft, ob es von der betrachteten *source* eine Nachbarschaft zu einer neuen BTS gibt und von dieser wiederum eine Nachbarschaft zu dem ursprünglichen *target* gibt. Ist das der Fall, so wird die vorgegebene *source-target*-Beziehung gelöscht.

Für die umzuplanenden BTS werden nur diejenigen berechneten Nachbarn 4 erhalten, die entweder in dem Teilnetz der neuen BTS liegen oder die auch als Nachbarn vorgegeben wurden. Im letzten Fall wird das Status-flag auf DB_NAPLA gesetzt. Alle weiteren vom Verfahren berechneten Nachbarn 4 werden gelöscht.

Vorgegebene Nachbarn, die nicht vom Verfahren berechnet wurden, werden wieder an die Nachbarschaftsliste mit allen Parametern angehangen, solange die Gesamtzahl Nachbarn kleiner MAX_NB ist. Sie erhalten den Status DB. Das Gewicht wird wieder gleich dem letzten vom Verfahren berechneten Nachbarn gesetzt.

### 4.3 Verschneidung für die alten BTS

Schließlich werden in einem dritten Schritt 12 alle alten BTS ermittelt, die nicht umzuplanen sind. Dies sind alte BTS, an denen bei der aktuellen Planung nichts geändert wurde. Deshalb wird für diese BTS das Betroffen-flag auf N_BETR gesetzt.

Bei diesen alten BTS wird die vorgegebene Nachbarschaftsliste 9 vollständig übernommen, d.h. die für diese BTS vom Verfahren geplante Nachbarschaft 4 wird überschrieben durch die vorgegebenen Nachbarn 9. Die Gewichte aller Nachbarn werden in diesem Fall gleich gesetzt.

Die Ergebnisse können mit einem Nachbarschaftseditor 13 dargestellt und zur Prüfung und Modifikation manuell bearbeitet werden.

### Anhang: Auflistung der Parameter

In diesem Anhang werden nochmals die von diesem Ausführungsbeispiel des Verfahrens verwendeten Parameter aufgelistet mit einer kurzen Erläuterung. Die genaue Bedeutung der Parameter ist in den bereits erwähnten GSM-Recommendations beschrieben.

| Parameter | Erläuterung |
|---|---|
| HO_MARGIN | Hysterese für handover |
| RXLEV_MIN | Pegelschwelle für Nachbar-BTS für handover |
| MS_RANGE_MAX | Entfernungsschwellenwert für handover |
| MS_TXPWR_MAX | maximal erlaubte Sendeleistung der Mobilstation |
| P(MS) | tatsächliche Mobilstation-Sendeleistung |
| N | number of preferred target cells |
| MAX_NB | GSM-Höchstgrenze für Anzahl Nachbam |
| MIN_NB | Anzahl zu erhaltender Nachbarn beim Komprimieren |

### Patentansprüche

1. Verfahren zur globalen Nachbarschaftsplanung von Feststationen eines zellularen Funknetzes, welches Feststationen sowie mobile Kommunikationsendgeräte beinhaltet, wobei ein zu planendes Gebiet in ein Raster von rechteckigen Rasteretementen unterteilt wird,
wobei individuell auf jedem Rasterelemente des vordefinierten Rasters eine Bestimmung der lokalen Nachbarschaften zwischen den dieses Rasterelement versorgenden Feststationen erfolgt, und diese zu einer globalen Nachbarschaftsplanung der Feststationen für das gesamte zu planende Gebiet zusammengefasst werden, wobei zur lokalen Bestimmung der Nachbarschaft die durch eine Feldstärkeprädiktion ermittelten Feldstärken der Feststationen verwendet werden und auf jedem Rasterelement mindestens zwei der das Rasterelement versorgenden Feststationen betrachtet werden,
**dadurch gekennzeichnet,**
**dass** als Kriterium für die Bestimmung der Nachbarschaften Handover-Kriterien des zellularen Funknetzes verwendet werden, wobei auf einem Rasterelement unsymmetrische lokale Nachbarschaften zwischen mindestens jeweils zwei Feststationen definiert werden, wenn die Kriterien für die Bestimmung der Nachbarschaften erfüllt sind, d.h. wenn aufgrund der Handover-Kriterien und der Feldstärken ein Handover zwischen den betrachteten Feststationen möglich ist.

2. Verfahren nach Anspruch 1,
**dadurch gekennzeichnet,**
**daß** die Gesamtzahl der Rasterelemente, auf denen eine bestimmte lokale Nachbarschaft ermittelt wurde, als Maß für die Stärke der jeweiligen globalen Nachbarschaft definiert wird.

3. Verfahren nach einem der vorhergehenden Ansprüche,
**dadurch gekennzeichnet,**
**daß** für jede erste Feststation nur eine begrenzte Zahl von ihr global benachbarten Feststationen berücksichtigt wird, wobei zur Auswahl der zu berücksichtigen den, global benachbarten Feststationen deren globale Nachbarschaftsbeziehungen zu der ersten Feststation mit berücksichtigt werden.

4. Verfahren nach einem der vorhergehenden Ansprüche,
**dadurch gekennzeichnet,**
**daß** bei der Nachbarschaftsplanung vorgegebene Nachbarschaftsdaten der Feststationen mit berücksichtigt werden.

5. Verfahren nach einem der vorhergehenden Ansprüche,

**dadurch gekennzeichnet,**

**daß** das zu planende Gebiet aus einem im Rahmen einer Nachbarschaftsplanung neu zu planenden und/oder umzuplanenden ersten Netzbereich sowie einem zweiten Netzbereich besteht, der durch die Planung unverändert bleibt.

## Claims

1. Process for global neighbourhood planning of fixed stations of a cellular radio communications network, which contains fixed stations and mobile communication terminals, wherein an area to be planned is divided into a grid of rectangular grid elements, wherein determination of the local neighbourhoods between the fixed stations supplying this grid element takes place individually on each grid element of the predefined grid, and the fixed stations are combined to form global neighbourhood planning of fixed stations for the entire area to be planned, wherein for local determination of the neighbourhood, the field strengths of the fixed stations determined by a field strength prediction are used and on each grid element, at least two of the fixed stations supplying the grid element are considered, **characterised in that** handover criteria of the cellular radio communications network are used as a criterion for determining the neighbourhoods, wherein unsymmetrical local neighbourhoods between at least in each case two fixed stations are defined on a grid element when the criteria for determining the neighbourhoods are fulfilled, that is when a handover between the fixed stations considered is possible due to the handover criteria and the field strengths.

2. Process according to claim 1, **characterised in that** the total number of grid elements, on which a certain local neighbourhood has been determined, is defined as a measure of the strength of the particular global neighbourhood.

3. Process according to one of the preceding claims, **characterised in that** for each first fixed station, only a limited number of its globally adjacent fixed stations are taken into account, wherein to select the globally adjacent fixed stations to be taken into account, their global neighbourhood relationships to the first fixed station are also taken into account.

4. Process according to one of the preceding claims, **characterised in that** for neighbourhood planning, preset neighbourhood data of the fixed stations are also taken into account.

5. Process according to one of the preceding claims, **characterised in that** the area to be planned consists of a first network region to be planned anew and/or to be replanned within the framework of neighbourhood planning and a second network region which remains unchanged by the planning.

## Revendications

1. Procédé pour la planification de voisinage mondiale de stations fixes d'un réseau radio cellulaire qui contient des stations fixes et des terminaux de communication mobiles, selon lequel une zone à planifier est divisée en une trame d'éléments de trame rectangulaires, sur chaque élément de trame de la trame prédéfinie a lieu individuellement une définition des voisinages locaux entre les stations fixes qui alimentent cet élément de trame, et ces voisinages locaux sont réunis en une planification de voisinage mondiale des stations fixes pour toute la zone à planifier, et enfin pour la définition locale du voisinage, on utilise les intensités de champ des stations fixes déterminées par une prévision d'intensité de champ, et sur chaque élément de trame, au moins deux des stations fixes qui alimentent l'élément de trame sont prises en considération,

   **caractérisé en ce qu'**on utilise comme critère, pour définir les voisinages, des critères de transfert du réseau radio cellulaire, étant précisé que sur un élément de trame, des voisinages locaux asymétriques entre au moins deux stations fixes sont définis si les critères pour définir les voisinages sont remplis, c'est-à-dire si un transfert entre les stations fixes considérées est possible sur la base des critères de transfert et des intensités de champ.

2. Procédé selon la revendication 1, **caractérisé en ce que** le nombre total d'éléments de trame sur lesquels un voisinage local défini a été déterminé est défini comme mesure pour l'intensité du voisinage mondial correspondant.

3. Procédé selon l'une des revendications précédentes, **caractérisé en ce que** pour chaque première station fixe, on ne tient compte que d'un nombre limité de stations fixes voisines mondialement de celle-ci, étant précisé que pour sélectionner les stations fixes voisines mondialement à prendre en compte, on tient compte aussi de leurs relations de voisinage mondiales avec ladite première station mobile.

4. Procédé selon l'une des revendications précédentes, **caractérisé en ce que** pour la planification de voisinage, on tient compte aussi de données de voisinage prédéfinies des stations fixes.

5. Procédé selon l'une des revendications précédentes, **caractérisé en ce que** la zone à planifier se compose d'une première zone de réseau à replanifier et/ou réorganiser dans le cadre d'une planification de voisinage, et d'une seconde zone de réseau qui reste non affectée par la planification.

Fig. 1